# EUROPEAN PATENT APPLICATION

(11) **EP 4 632 897 A1**
(43) Date of publication of application: **15.10.2025**
(21) Application number: 24863190.5
(22) Date of filing: 04.09.2024
(51) Int. Cl.: H01M 50/204, H01M 50/289

(54) **PACK HOUSING AND MANUFACTURING METHOD THEREOF**

(30) Priority: 07.09.2023 KR 20230119029
(71) Applicant: LG Energy Solution, Ltd., Seoul 07335 (KR)
(72) Inventor: SHIN, Ju Hwan, Daejeon 34122 (KR); HUR, Nam Hoon, Daejeon 34122 (KR); LEE, Hyoung Suk, Daejeon 34122 (KR)
(74) Representative: Plasseraud IP
(86) International application number: PCT/KR2024/013328
(87) International publication number: WO 2025/053610

(57) **Abstract**

Example embodiments provide a pack housing. The pack housing includes a center plate, side plates coupled to the center plate, and side beams coupled to the side plates, in which each of the side plates includes a reinforcing bead extending in a first direction, and the first direction is parallel to a mounting surface of each of the side plates.

## Description

### [Technical Field]

The present invention relates to a pack housing employed in a battery pack, and a manufacturing method thereof. The present application claims the benefit of priority based on Korean Patent Application No. 10-2023-0119029, filed on September 7, 2023, the entire contents disclosed therein is incorporated by reference into this specification.

### [Background Art]

Secondary batteries can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A trend in the development of technology for secondary batteries for mobility is an improvement in energy density and safety. The safety of secondary batteries for mobility is directly related to passengers' lives and thus is very important. The safety of secondary batteries may be achieved through mechanical robustness, reliability of electrical insulation, and heat transfer delay when a thermal runaway event occurs.

### [Disclosure]

### [Technical Problem]

The present invention is directed to providing a pack housing with improved reliability and mechanical robustness, and a manufacturing method thereof.

### [Technical Solution]

Example embodiments of the present invention provide a pack housing. The pack housing includes a center plate, side plates coupled to the center plate, and side beams coupled to the side plates, in which each of the side plates includes a reinforcing bead extending in a first direction, and the first direction is parallel to a mounting surface of each of the side plates.

Each of the side plates may include a bottom surface opposite to the mounting surface, and the reinforcing bead of each of the side plates may be on the bottom surface of each of the side plates.

The reinforcing bead of each of the side plates may be solid.

The reinforcing bead of each of the side plates may be hollow.

The center plate may include a center reinforcing bead extending in the first direction.

The center plate may include a center beam extending in the first direction.

The side plates may be spaced apart from each other in a second direction, which is perpendicular to the first direction, with the center plate interposed therebetween.

A height of the reinforcing bead may be in a range of 0.1 mm to 10 mm.

Example embodiments provide a method of manufacturing a pack housing. The method includes: extruding a center plate, side plates, and side walls; aligning the center plate, the side plates, and the side walls, in which the side plates are spaced apart from each other with the center plate interposed therebetween, and the side walls are spaced apart from each other with the center plate and the side plates interposed therebetween; coupling a reinforcing structure to the side walls; and welding the center plate, the side plates, and the side walls together.

Each of the side plates may include a reinforcing bead extending in a first direction, and the reinforcing bead of each of the side plates may be formed by extruding the side plates.

The reinforcing structure may be perpendicular to an extrusion direction of the center plate, the side plates, and the side walls.

The reinforcing structure may be coupled to the side walls by bolting.

The reinforcing structure may be coupled to the side walls by welding.

The method may further include separating the reinforcing structure from the side walls.

### [Advantageous Effects]

According to example embodiments of the present invention, a center plate, side plates, and side walls of a pack housing can be prevented from being bent when they are welded together. Accordingly, the mechanical robustness and reliability of the pack housing can be improved.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view of a pack housing according to example embodiments.
FIG. 2 is a perspective view of a pack housing according to example embodiments.
FIG. 3 is a cross-sectional view taken along line 1I-1I' of FIG. 1.
FIG. 4 is a plan view of a battery pack according to example embodiments.
FIG. 5 is a cross-sectional view of a pack housing according to other example embodiments.
FIG. 6 is a cross-sectional view of a pack housing according to other example embodiments.
FIG. 7 is a cross-sectional view of a pack housing according to other example embodiments.
FIG. 8 is a flowchart of a method of manufacturing a pack housing according to example embodiments.
FIG. 9 is a cross-sectional view for describing a method of manufacturing a pack housing according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

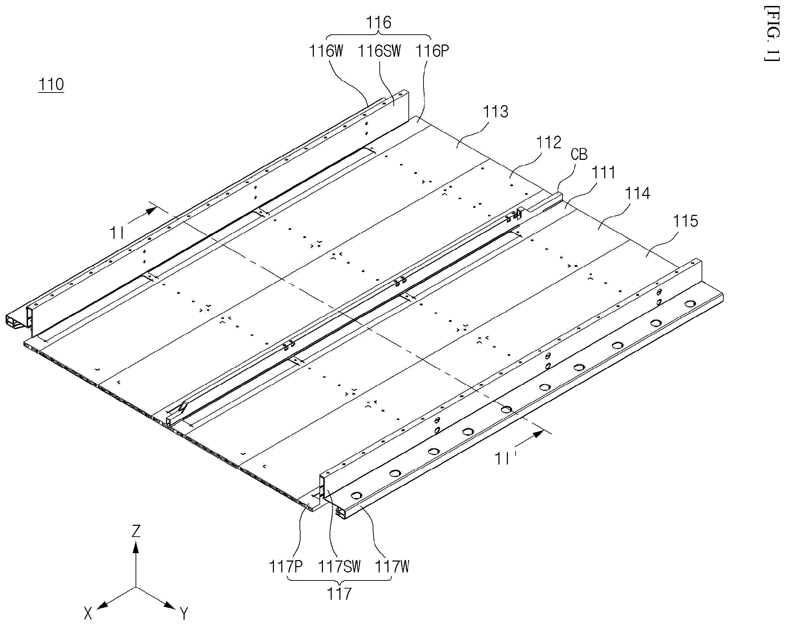

FIG. 1 is a perspective view of a pack housing 110 according to example embodiments.

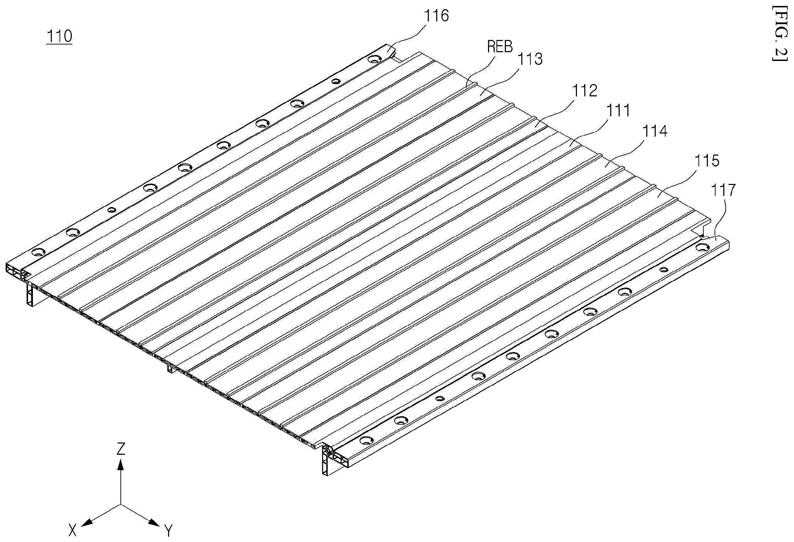

FIG. 2 is a perspective view of the pack housing 110 according to example embodiments.

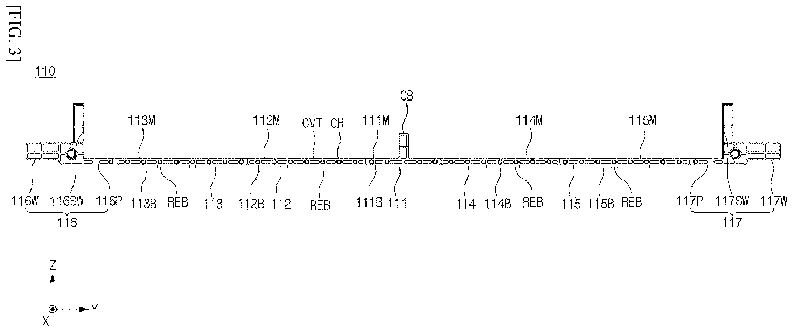

FIG. 3 is a cross-sectional view taken along line 1I-1I' of FIG. 1.

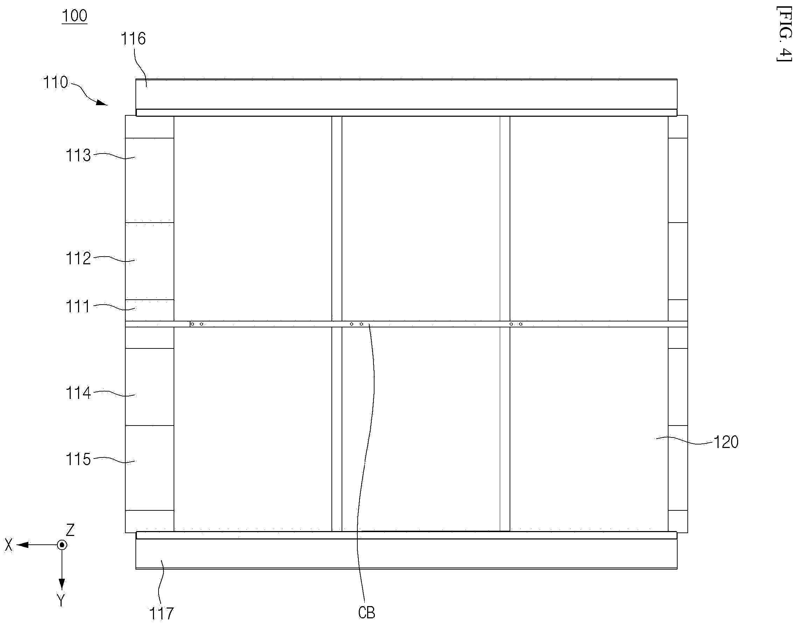

Referring to FIGS. 1 to 3, the pack housing 110 may provide a space for mounting battery cell assemblies 120 (see FIG. 4) to be described below. The pack housing 110 may include a center plate 111, side plates 112, 113, 114, and 115, and side walls 116 and 117. The battery cell assemblies 120 (see FIG. 4) may be on mounting surfaces 111M, 112M, 113M, 113M, 114M and 115M of the center plate 111 and the side plates 112, 113, 114, and 115.

Two directions substantially parallel to the mounting surfaces 111M, 112M, 113M, 114M, and 115M of the center plate 111 and the side plates 112, 113, 114, and 115 will be defined as an X-axis direction and a Y-axis direction, and a direction substantially perpendicular to the mounting surfaces 111M, 112M, 113M, 114M, and 115M of the center plate 111 and the side plates 112, 113, 114, and 115 will be defined as a Z-axis direction. The X-axis direction, the Y-axis direction, and the Z-axis direction may be substantially perpendicular to one another. Unless otherwise mentioned, the definition of the directions will apply to the following drawings.

Each of the center plate 111 and the side plates 112, 113, 114, and 115 may be provided by an extrusion process. An extrusion direction of each of the center plate 111 and the side plates 112, 113, 114, and 115 may be the X-axis direction. The center plate 111 and the side plates 112, 113, 114, and 115 may be arranged in the Y-axis direction.

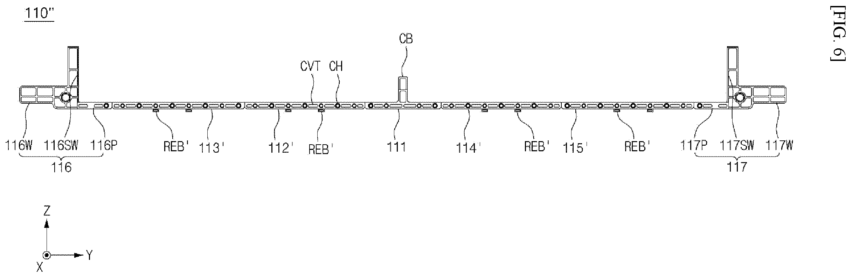

The center plate 111 may be interposed between the side plates 112 and 113 and the side plates 114 and 115. In FIGS. 1 to 5, the four side plates 112, 113, 114, and 115 and the center plate 111 therebetween are shown, but they are only non-limiting examples and should not be understood as limiting the technical idea of the present invention in any sense. The number of the side plates 112, 113, 114, and 115 may vary according to the design of a finally manufactured battery pack 100 (see FIG. 6).

The center plate 111 and the side plates 112, 113, 114, and 115 may be combined with each other. The center plate 111 and the side plates 112, 113, 114, and 115 may be combined with each other by, for example, friction stir welding. Accordingly, there may be welding surfaces between the center plate 111 and the side plates 112, 113, 114, and 115.

However, the present invention is not limited thereto, and the center plate 111 and the side plates 112, 113, 114, and 115 may be combined with each other by arc welding, laser welding, electron beam welding, friction welding, ultrasonic welding, or the like.

Each of the center plate 111 and the side plates 112, 113, 114, and 115 may include cooling channels CH, cavities CVT, and a rib. Each of the cooling channels CH, the cavities CVT, and the rib may extend in the extrusion direction (i.e., the X-axis direction).

The cooling channels CH may provide a path through which a cooling fluid flows. The cooling channels CH may be spaced apart from each other in the Y-axis direction. The cooling channels may be arranged in the Y-axis direction.

The cavities CVT are empty spaces in the center plate 111 and the side plates 112, 113, 114, and 115. Due to the formation of the cavities CVT, the mass of the center plate 111 and the side plates 112, 113, 114, and 115 may decrease, thus increasing energy density of the battery pack 100 (see FIG. 6) including the pack housing 110.

The cooling channels CH and the cavities CVT may be defined by the rib. The cooling channels CH and the cavities CVT may be surrounded by the rib. The rib may maintain airtightness of the cooling channels CH and the cavities CVT.

The center plate 111 may include a center beam CB. The center beam CB may protrude from the mounting surface 111M of the center plate 111. The center beam CB may extend in the X-axis direction.

Each of the side plates 112, 113, 114, and 115 may include reinforcing beads REB. Each of the reinforcing beads REB of each of the side plates 112, 113, 114, and 115 may extend in the X-axis direction. A length of each of the reinforcing beads REB of each of the side plates 112, 113, 114, and 115 may be substantially the same as a length of each of the side plates 112, 113, 114, and 115.

The reinforcing beads REB of the side plates 112, 113, 114, and 115 may be on bottom surfaces 112B, 113B, 114B, and 115B of the side plates 112, 113, 114, and 115. The reinforcing beads REB of the side plates 112, 113, 114, and 115 may protrude from the bottom surfaces 112B, 113B, 114B, and 115B of the side plates 112, 113, 114, and 115. The bottom surface 112B may be opposite to the mounting surface 112M. The bottom surface 113B may be opposite to the mounting surface 113M. The bottom surface 114B may be opposite to the mounting surface 114M. The bottom surface 115B may be opposite to the mounting surface 115M.

In the present example, the reinforcing beads REB may be solid. Accordingly, the height of the reinforcing beads REB may be minimized, and the energy density of the battery pack 100 (see FIG. 4) including the pack housing 110 may be improved. According to example embodiments, the height of each of the reinforcing beads REB may be in a range of about 0.1 mm to about 10 mm. According to example embodiments, the height of each of the reinforcing beads REB may be about 0.5 mm or more. According to example embodiments, the height of each of the reinforcing beads REB may be about 5 mm or less. According to example embodiments, the height of each of the reinforcing beads REB may be about 3 mm or less.

Furthermore, interference between the reinforcing beads REB and a cover plate may be prevented when the cover plate is coupled under the pack housing 110 (i.e., to the bottom surfaces 112B, 113B, 114B, and 115B of the side plates 112, 113, 114, and 115).

According to example embodiments, each of the side plates 112, 113, 114, and 115 may be prevented from being bent in the X-axis direction due to the reinforcing beads REB, thereby improving the mechanical robustness and reliability of the pack housing 110.

The side wall 116 may be provided by the extrusion process. Accordingly, the side wall 116 may include a cooling channel and cavities. The sidewall 116 may include a plate part 116P, a side wall part 116SW, and a wing part 116W. The side wall part 116SW may be substantially perpendicular to the plate part 116P. The wing part 116W may be located outside the side wall part 116SW. The wing part 116W may include a plurality of coupling holes. The wing part 116W may be used to transfer the pack housing 110 (see FIG. 4) or be used to transfer and fix the pack housing 110 (e.g., fix the pack housing 110 to a vehicle or another battery tray).

The side wall 117 may be provided by the extrusion process. Accordingly, the side wall 117 may include a cooling channel and cavities. The side wall 117 may include a plate part 117P, a side wall part 117SW, and a wing part 117W. The plate parts 116P and 117P may form a base plate of the pack housing 110 together with the center plate 111 and the side plates 112, 113, 114, and 115. The side wall part 117SW may be substantially perpendicular to the plate part 117P. The wing part 117W may be located outside the side wall part 117SW. The wing part 117W may include a plurality of coupling holes. The wing part 117W may be used to transfer the pack housing 110 (see FIG. 4) or be used to transfer and fix the pack housing 110 (e.g., fix the pack housing 110 to a vehicle or another battery tray).

### (Second Embodiment)

FIG. 4 is a plan view of a battery pack according to example embodiments.

Referring to FIGS. 1 to 4, the battery pack 100 may include the pack housing 110 and the plurality of battery cell assemblies 120.

The pack housing 110 is substantially the same as that described above with reference to FIGS. 1 to 3. The plurality of battery cell assemblies 120 may be on the center plate 111 and the side plates 112, 113, 114, and 115 of the pack housing 110. The center plate 111 and the side plates 112, 113, 114, and 115 may support the plurality of battery cell assemblies 120. The side walls 116 and 117 and additional side walls may horizontally surround the plurality of battery cell assemblies 120. The side walls 116 and 117 and the additional side walls may protect the plurality of battery cell assemblies 120.

For example, the battery pack 100 may be a moduleless type battery pack, and each of the plurality of battery cell assemblies 120 may not include a module frame. As another example, the battery pack 100 may be a module type battery pack, and each of the plurality of battery cell assemblies 120 may include a module frame.

Each of the plurality of battery cell assemblies 120 may include a plurality of banks connected in series to each other. Each of the plurality of banks may include one or more battery cells connected in parallel. The number of banks connected in series and the number of battery cells connected in parallel may be determined according to a voltage and a current to be output from each of the plurality of battery cell assemblies 120.

The battery cells are basic units of a lithium ion battery, i.e., a secondary battery. Each of the battery cells includes an electrode assembly, an electrolyte, and a case. Each of the battery cells may be a cylindrical battery cell, a prismatic battery cell, or a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

The electrode assembly may include a positive electrode, a negative electrode, and a separator between the positive electrode and the negative electrode. The electrode assembly may be a j elly-roll type electrode assembly or a stack type electrode assembly. The j elly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween.

The plurality of battery cell assemblies 120 may be arranged in the X-axis direction and the Y-axis direction. In FIG. 1, the number of battery cell assemblies 120 arranged in the X-axis direction is three, and the number of battery cell assemblies 120 arranged in the Y-axis direction is two. Accordingly, an array of the plurality of battery cell assemblies 120 may be a 3x2 array. Those of ordinary skill in the art will be able to easily derive a plurality of battery cell assemblies 120 arranged in an MxN array (here, M and N are each an integer of 2 or more), based on the above description.

The center beam CB may isolate the plurality of battery cell assemblies 120 in the Y-axis direction. The center beam CB may be interposed between the plurality of battery cell assemblies 120. According to example embodiments, the battery pack 100 may further include cross beams that isolate the plurality of battery cell assemblies 120 in the X-axis direction.

An arrangement of the center beam CB and the plurality of battery cell assemblies 120 shown in FIG. 1 is a non-limiting example and should not be understood as limiting the technical idea of the present invention in any sense. A battery pack that includes various numbers and arrangements of a center beam, cross-beams, and battery cell assemblies will be easily derived by those of ordinary skill in the art according to the above description.

The battery pack 100 may further include an exhaust device. The exhaust device may be configured to delay thermal propagation by discharging a high-temperature gas from the inside of the battery pack 100 to the outside when at least one of the plurality of battery cell assemblies 120 is in a thermal runaway state.

Here, the thermal runaway state of the plurality of battery cell assemblies 120 is a state in which a change of temperature of the plurality of battery cell assemblies 120 accelerates the change of temperature, i.e., an uncontrollable positive feedback. The temperature of the plurality of battery cell assemblies 120 that are in a thermal runaway state sharply increases, and a large amount of high-pressure gas and combustion debris are discharged.

The battery pack 100 may further include electronic components. The electronic components may be on the pack housing 110. The electronic components may include an electronic device required to drive a battery pack.

The electronic components may include, for example, a battery management system (BMS). The BMS may be configured to monitor, balance, and control the battery pack. The monitoring of the battery pack 100 may include measuring voltages and currents of certain nodes inside the plurality of battery cell assemblies 120 and measuring temperatures at set positions in the battery pack 100. The battery pack 100 may include measuring devices for measuring a voltage, a current, and temperature as described above.

The balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions, thereby preventing the lifespan of each of the plurality of battery cell assemblies 120 from being shortened.

The electronic components may further include a cooling device, a power relay assembly (PRA), a safety plug, etc. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and the external load (e.g., a motor of a vehicle), when abnormal voltage such as voltage surges occurs.

The battery pack 100 may further include a plurality of bus bars configured to electrically connect the plurality of battery cell assemblies 120. The plurality of battery cell assemblies 120 may be connected in series by the plurality of bus bars. Accordingly, the battery pack 100 may be configured to output a high voltage to an external load (e.g., a motor of a vehicle).

The battery pack 100 may further include a lead plate coupled to the side walls 116 and 117 and additional side walls. The lead plate may cover elements, such as the battery cell assemblies 120 and the electronic components, in the battery pack 100. The lead plate may be fixed to the battery pack 100 by a mechanical coupling means such as a fastening member.

### (Third Embodiment)

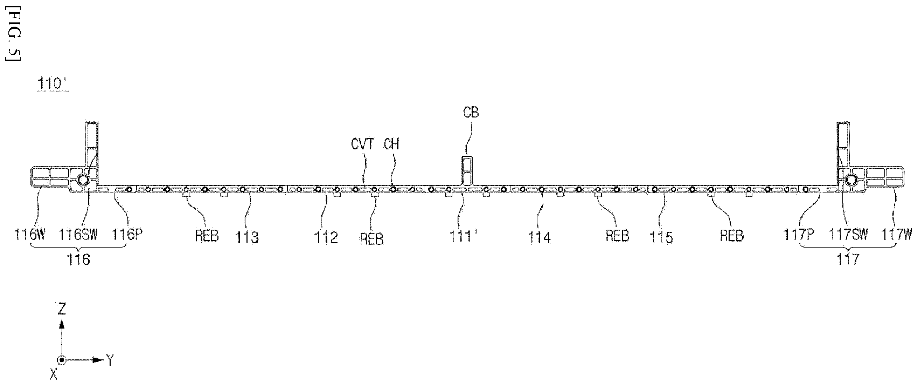

FIG. 5 is a cross-sectional view of a pack housing 110' according to other example embodiments.

Referring to FIG. 5, the pack housing 110' may include a center plate 111', side plates 112, 113, 114, and 115, and side walls 116 and 117. The side plates 112, 113, 114, and 115 and the side walls 116, 117 are substantially the same as those described above with reference to FIGS. 1 to 3 and thus redundant description thereof is omitted here.

The center plate 111' may further include reinforcing beads REB unlike the center plate 111 of FIGS. 1 to 3. Accordingly, resistance to the bending of the center plate 111', and the mechanical robustness and reliability of the pack housing 110' can be improved. In FIG. 5, the reinforcing beads REB of the center plate 111' are solid but may be hollow unlike that illustrated in FIG. 5.

### (Fourth Embodiment)

FIG. 6 is a cross-sectional view of a pack housing 110" according to other example embodiments. Referring to FIG. 6, the pack housing 110" may include a center plate 111, side plates 112', 113', 114', and 115', and side walls 116 and 117. The center plate 111 and the side walls 116 and 117 are substantially the same as those described above with reference to FIGS. 1 to 3 and thus redundant description thereof is omitted here.

The side plates 112', 113', 114', and 115' may be substantially the same as the side plates 112, 113, 114, and 115 of FIGS. 1 to 3, except for reinforcing beads REB'. Each of the side plates 112', 113', 114', and 115' may include reinforcing beads REB'. Each of the reinforcing beads REB' may extend in the X-axis direction. Each of the reinforcing beads REB' may include a cavity. Each of the reinforcing beads REB' may be hollow. Accordingly, the mechanical robustness of the side plates 112', 113', 114', and 115' may be secured, and the energy density of a battery pack including the side plates 112', 113', 114', and 115' may be increased due to light weight of the reinforcing beads REB'.

The cavities in the reinforcing beads REB' may not be configured to allow the flow of a cooling fluid. The cavities in the reinforcing beads REB' may not be connected to a cooling fluid supply device. The cavities in the reinforcing beads REB' may be isolated from the cooling fluid supply device. The cavities in the reinforcing beads REB' may have a shape different from that of a cooling channels CH. For example, the cooling channels CH may have a circular cross section, and the cavities in the reinforcing beads REB' may have a quadrangular cross section.

### (Fifth Embodiment)

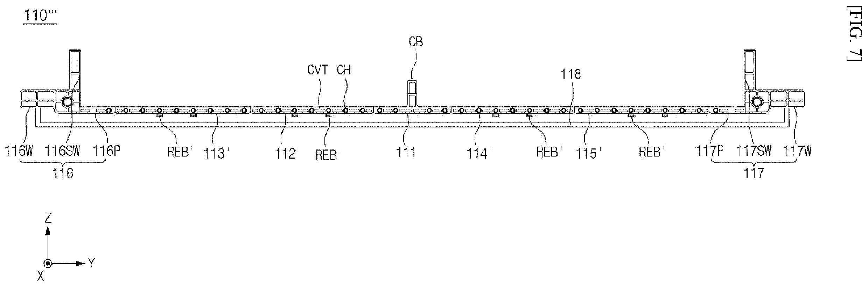

FIG. 7 is a cross-sectional view of a pack housing 110‴ according to other example embodiments.

Referring to FIG. 7, the pack housing 110‴ may include a center plate 111', side plates 112, 113, 114, and 115, side walls 116 and 117, and a reinforcing structure 118. The center plate 111, the side plates 112, 113, 114, and 115 and the side walls 116, 117 are substantially the same as those described above with reference to FIGS. 1 to 3 and thus redundant description thereof is omitted here.

According to example embodiments, the reinforcing structure 118 may be coupled to the side walls 116 and 117. The reinforcing structure 118 may have a roughly bar shape. The reinforcing structure 118 may extend in the Y-axis direction.

According to example embodiments, the reinforcing structure 118 may be coupled to the side walls 116 and 117 by welding. According to other example embodiments, the reinforcing structure 118 may be coupled to the side walls 116 and 117 by bolting. The reinforcing structure 118 may include a rod part and a leg part. The rod part of the reinforcing structure 118 may be substantially parallel to the Y-axis direction and the leg part thereof may be substantially parallel to the Z-axis direction.

According to example embodiments, the center plate 111 and the side plates 112, 113, 114, and 115 may be prevented from being bent in the Y-axis direction due to the reinforcing structure 118, thus improving the mechanical robustness and reliability of the pack housing 110‴.

### (Sixth Embodiment)

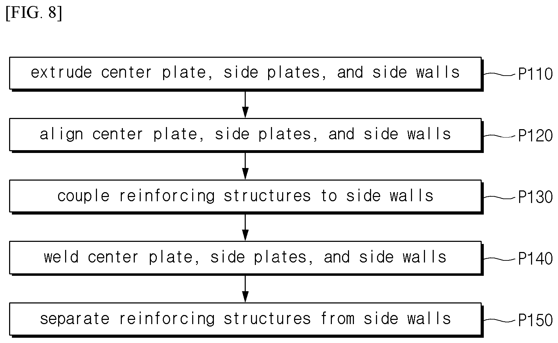

FIG. 8 is a flowchart of a method of manufacturing the pack housing 110 (see FIG. 1) according to example embodiments.

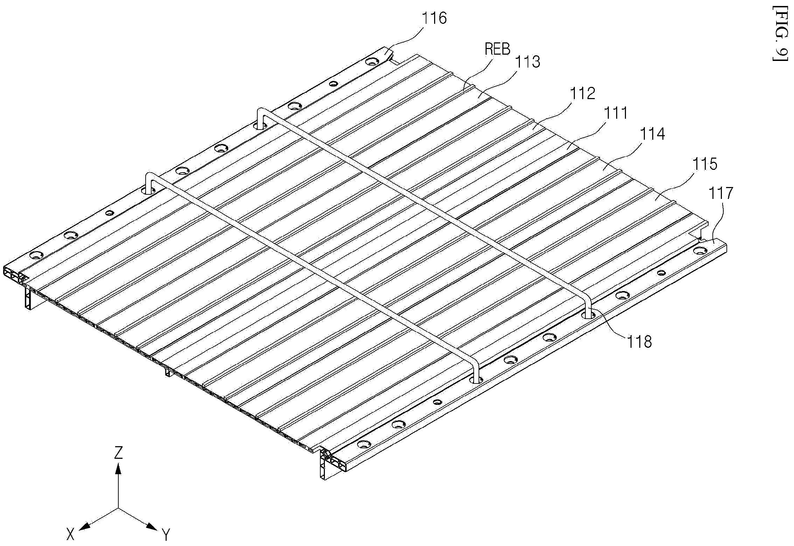

FIG. 9 is a cross-sectional view for describing the method of manufacturing the pack housing 110 (see FIG. 1) according to example embodiments.

Referring to FIGS. 2, 3, and 8, in P110, the center plate 111, the side plates 112, 113, 114 and 115, and the side walls 116 and 117 may be extruded. Because the center plate 111, the side plates 112, 113, 114 and 115, and the side walls 116 and 117 are provided by an extrusion process, they may be relatively long (e.g., in the X-axis direction) and have a constant cross section (e.g., a YZ cross section) in the X-axis direction. However, the present invention is not limited thereto, and the center plate 111, the side plates 112, 113, 114 and 115 and the side walls 116 and 117 may be mechanically processed and have variable cross-sections. For example, the center plate 111, the side plates 112, 113, 114 and 115 and the side walls 116 and 117 may include a first part having a constant cross section and a second part having a variable cross section.

Accordingly, a cross section of each of the center plate 111, the side plates 112, 113, 114 and 115 and the side walls 116 and 117 that is perpendicular to the X-axis direction (i.e., on a YZ plane) may be constant. Channels CH and cavities CVT of the center plate 111 and the side plates 112, 113, 114 and 115 may be formed by the extrusion process.

Reinforcing beams REB may also be formed in the extrusion process of the center plate 111 and the side plates 112, 113, 114, and 115. Accordingly, each of the reinforcing beams REB may be substantially parallel to the X-axis direction, which is an extrusion direction of the center plate 111 and the side plates 112, 113, 114 and 115.

Next, in P120, the center plate 111, the side plates 112, 113, 114 and 115, and the side walls 116 and 117 may be aligned. The alignment of the center plate 111, the side plates 112, 113, 114 and 115, and the side walls 116 and 117 may include placing the center plate 111 in the middle of the side plates 112, 113, 114 and 115, placing the center plate 111 and the side plates 112, 113, 114 and 115 between the side walls 116 and 117, and fixing them using fixing means such as a jig.

Referring to FIGS. 8 and 9, in P130, reinforcing structures 118 may be coupled to the side walls 116 and 117. The reinforcing structures 118 may be coupled to the side walls 116 and 117 by bolting and/or welding.

Next, in P140, the center plate 111, the side plates 112, 113, 114 and 115, and the side walls 116 and 117 may be welded together. According to example embodiments, during the welding of the center plate 111, the side plates 112, 113, 114 and 115, and the side walls 116 and 117, the center plate 111, the side plates 112, 113, 114, and 115, and the side walls 116 and 117 may be supported by the reinforcing beads REB and the reinforcing structures 118, thereby preventing bending of the center plate 111, the side plates 112, 113, 114 and 115, and the side walls 116, 117.

Thereafter, in P150, the reinforcing structures 118 may be separated from the side walls 116 and 117. The reinforcing structures 118 may be separated by applying a physical force, unvolting or the like. In some cases, the separation of the reinforcing structures 118 may be omitted.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A pack housing comprising:
a center plate;
side plates coupled to the center plate; and
side beams coupled to the side plates,
wherein each of the side plates includes a reinforcing bead extending in a first direction, and the first direction is parallel to a mounting surface of each of the side plates.

2. The pack housing of claim 1, wherein each of the side plates includes a bottom surface opposite to the mounting surface, and
the reinforcing bead of each of the side plates is on the bottom surface of each of the side plates.

3. The pack housing of claim 1, wherein the reinforcing bead of each of the side plates is solid.

4. The pack housing of claim 1, wherein the reinforcing bead of each of the side plates is hollow.

5. The pack housing of claim 1, wherein the center plate includes a center reinforcing bead extending in the first direction.

6. The pack housing of claim 1, wherein the center plate includes a center beam extending in the first direction.

7. The pack housing of claim 1, wherein the side plates are spaced apart from each other in a second direction with the center plate interposed therebetween, the second direction being perpendicular to the first direction.

8. The pack housing of claim 1, wherein a height of the reinforcing bead is in a range of 0.1 mm to 10 mm.

9. A method of manufacturing a pack housing, comprising:
extruding a center plate, side plates, and side walls;
aligning the center plate, the side plates, and the side walls, wherein the side plates are spaced apart from each other with the center plate interposed therebetween, and the side walls are spaced apart from each other with the center plate and the side plates interposed therebetween;
coupling a reinforcing structure to the side walls; and
welding the center plate, the side plates, and the side walls together.

10. The method of claim 9, wherein each of the side plates includes a reinforcing bead extending in a first direction, and
the reinforcing bead of each of the side plates is formed by extruding the side plates.

11. The method of claim 9, wherein the reinforcing structure is perpendicular to an extrusion direction of the center plate, the side plates, and the side walls.

12. The method of claim 9, wherein the reinforcing structure is coupled to the side walls by bolting.

13. The method of claim 9, wherein the reinforcing structure is coupled to the side walls by welding.

14. The method of claim 9, further comprising separating the reinforcing structure from the side walls.
